# EUROPÄISCHE PATENTANMELDUNG

(11) **EP 1 602 268 A2**
(43) Veröffentlichungstag der Anmeldung: **07.12.2005**
(21) Anmeldenummer: 05011356.2
(22) Anmeldetag: 25.05.2005
(51) Int. Cl.: A01D 43/07, B60P 1/06

(54) **Kippanhänger für Aufsitzmäher**

(30) Priorität: 03.06.2004 DE 202004008853 U
(71) Anmelder: Borchard, Stefan, 32547 Bad Oeynhausen (DE)
(72) Erfinder: Borchard, Stefan, 32547 Bad Oeynhausen (DE)
(74) Vertreter: Wiebusch, Manfred

(57) **Zusammenfassung**

Kippanhänger für Aufsitzmäher, mit einem Fahrgestell (10) und einem darauf montierten Aufbau, dadurch gekennzeichnet, daß der Aufbau eine trichterförmige Wanne (12) ist, die sich über Kugelpfannen (18) so auf dem Fahrgestell (10) abstützt, daß sie um mindestens eine durch zwei der Kugelpfannen (18) gebildete Achse kippbar ist.

## Beschreibung

Die Erfindung betrifft einen Kippanhänger für Aufsitzmäher, mit einem Fahrgestell und einem darauf montierten Aufbau.

Für Aufsitzrasenmäher sind Kippanhänger bekannt, die ein einachsiges Fahrgestell und einen kastenförmigen Aufbau aufweisen. Beim Kippen bildet die Achse des Fahrgestells zugleich die Kippachse. Es somit nur ein Kippen nach hinten möglich, wozu die Deichsel des Fahrgestells vom Rasenmäher abgekuppelt werden muß. Eine vollständige Entleerung des kastenförmigen Aufbaus ist auch in gekipptem Zustand nur dann möglich, wenn der Aufbau an der Rückseite eine ausschwenkbaren Ladeklappe aufweist. Dies erfordert eine aufwendige Konstruktion und führt, bedingt durch die relativ kleine Auskippöffnung, dazu, daß die Handhabung des Kippanhängers umständlich ist und die Einsatzmöglichkeiten nur beschränkt sind. Ein weiterer Nachteil besteht darin, daß die Montage des Aufbaus auf dem Fahrgestell sehr umständlich ist. Da die relativ sperrigen Kippanhänger aus Platzgründen zumeist im zerlegten Zustand an den Handel ausgeliefert werden, ergibt sich für den Handel der Nachteil, daß vor dem Weiterverkauf des Anhängers zeitraubende und kostspielige Montagearbeiten erforderlich sind.

Aufgabe der Erfindung ist es, einen Kippanhänger für Aufsitzmäher zu schaffen, der montagefreundlich und einfach zu handhaben ist und vielseitige Verwendungsmöglichkeiten bietet.

Diese Aufgabe wird erfindungsgemäß mit den in den unabhängigen Schutzansprüchen angegebenen Merkmalen gelöst. Vorteilhafte Ausgestaltungen und Weiterbildungen ergeben sich aus den Unteransprüchen.

Ein wesentliches Merkmal der Erfindung besteht darin, daß der Aufbau eine trichterförmige Wanne ist, die sich über Kugelpfannen so auf dem Fahrgestell abstützt, daß sie um mindestens eine durch zwei der Kugelpfannen gebildete Achse kippbar ist.

Aufgrund der trichterförmigen Gestaltung der Wanne verläuft mindestens eine Wand dieser Wanne schräg abwärts nach innen, so daß, wenn um eine zu dieser Wand parallele Achse gekippt wird, die Entleerung der Wanne ähnlich einfach ist wie bei einer Schubkarre. Eine aufwendige Ladeklappenkonstruktion ist somit nicht erforderlich. Da die Kippachse durch zwei der Kugelpfannen gebildet wird, ist die Wanne relativ zum Fahrgestell kippbar, und folglich braucht die Kippachse nicht mit der Achse des Fahrgestells zusammenzufallen. Dies ermöglicht es, die Lage der Kippachse und die Schräge der Wand der Wanne so aufeinander abzustimmen, daß das Ladegut beim Kippen praktisch von selbst aus der Wanne herausrutscht. Ein Abkuppeln des Fahrgestells vom Rasenmäher ist dabei nicht erforderlich.

Dadurch, daß sich die Wanne über Kugelpfannen auf dem Fahrgestell abstützt, wird zugleich die Montage des Aufbaus auf dem Fahrgestell wesentlich erleichtert.

In den Unteransprüchen sind vorteilhafte Weiterbildungen und Ausgestaltungen dieses Erfindungsgedankens angegeben, die es insbesondere ermöglichen, die Wanne je nach Anwendungssituation um unterschiedliche Achsen zu kippen.

Weitere Schutzansprüche betreffen Zusatzmodule, die sich einfache an dem Kippanhänger montieren lassen, um ein Multifunktionsgerät mit vielfältigen Einsatzmöglichkeiten zu schaffen. Diese Zusatzmodule sind bei einem Kippanhänger mit dem oben beschriebenen Aufbau besonders vorteilhaft, lassen sich jedoch auch bei anders gestalteten Kippanhängern vorteilhaft einsetzen.

Eines der Zusatzmodule ist ein Volumenaufsatz, der sich nach Art einer Haube auf den Aufbau, also die Wanne, aufsetzen läßt, so daß das Fassungsvermögen insbesondere für leichte Transportgüter wie Blätter, Obstbaumschnitt und dergleichen vergrößert wird und zugleich verhindert wird, daß das in und auf der Wanne aufgehäufte Transportgut herabfällt oder weggeweht wird. In einer besonders vorteilhaften Ausführungsform ist der Volumenaufsatz so gestaltet, daß das Auskippen der Wanne nach hinten und vorzugsweise auch zur Seite auch bei aufgesetztem Volumenaufsatz möglich ist.

Weitere Beispiele für zweckmäßige Zusatzmodule sind eine Kehrmaschine zum Aufsammeln von Rasenschnitt, Laub und dergleichen, eine Rasenharke oder ggf. auch ein Rasenlüfter, ein Düngerstreuer und dergleichen. Der Vorteil einer Kombination dieser Zusatzmodule mit dem Kippanhänger besteht insbesondere darin, daß das Gewicht der Wanne und ggf. des Inhalts dieser Wanne dazu benutzt werden kann, die Andruckkraft zu erhöhen, mit der das Zusatzmodul, etwa eine Rasenharke, gegen den Boden angedrückt wird und/oder um die Kraft zu vergrößern, mit der die Räder des Fahrgestells gegen den Boden gedrückt werden, so daß die Räder des Fahrgestells beim Ziehen des Anhängers ein hohes Drehmoment erzeugen, das für den Antrieb der Zusatzmodule, etwa einer Kehrmaschine oder eines Rasenlüfterss genutzt werden kann. In einer besonders vorteilhaften Ausführungsform lassen sich die Kehrmaschine und die Wanne so relativ zueinander positionieren, daß das Kehrgut unmittelbar in der Wanne aufgefangen wird, insbesondere auch bei aufgesetztem Volumenaufsatz. Die Kippfunktionen der Wanne können auch bei montierten Zusatzmodulen erhalten bleiben. Außerdem lassen sich diese Kippfunktionen dazu nutzen, die Zusatzmodule aus der Betriebstellung in eine Ruhestellung zu überführen und umgekehrt.

Im folgenden werden ein Ausführungsbeispiel des Kippanhängers sowie Beispiele für verschiedene Zusatzmodule anhand der Zeichnungen näher erläutert.

Es zeigen:
- Fig. 1: eine Seitenansicht des Kippanhängers;
- Fig. 2: eine Seitenansicht des Kippanhängers in nach hinten gekippter Stellung;
- Fig. 3 und 4: eine Seitenansicht bzw. eine perspektive Ansicht eines Fahrgestells des Kippanhängers ohne Achse und Räder;
- Fig. 5 und 6: eine perspektivische Ansicht und einen Schnitt durch eine Kugelpfanne;
- Fig. 7 bis 10: das Fahrgestell mit Achse und Rädern in einer Seitenansicht, einer Frontansicht, einer Draufsicht und einer perspektivischen Ansicht;
- Fig. 11 bis 14: eine den Aufbau des Kippanhängers bildende Wanne in einer Seitenansicht, Frontansicht, Draufsicht und perspektivischen Ansicht;
- Fig. 15: eine Rückansicht des Kippanhängers mit seitlich gekippter Wanne;
- Fig. 16: eine Seitenansicht des Kippanhängers in einer Kippstellung für das Beladen mit schweren Transportgütern;
- Fig. 17 bis 19: den Kippanhänger mit einem Volumenaufsatz in einer Seitenansicht, einer Draufsicht und einer perspektivischen Ansicht;
- Fig. 20 bis 23: eine Seitenansicht, Frontansicht, Draufsicht und perspektivische Ansicht des Kippanhängers in seitlich gekippter Stellung mit Volumenaufsatz;
- Fig. 24 und 25: eine Seitenansicht und eine perspektivische Ansicht des Kippanhängers mit Volumenaufsatz und einer Kehrmaschine als weiterem Zusatzmodul;
- Fig. 26 bis 29: die Kehrmaschine in einer Seitenansicht, Frontansicht, Draufsicht und perspektivischen Ansicht;
- Fig. 30: eine Seitenansicht des Kippanhängers mit Volumenaufsatz, Kehrmaschine und einer Rasenharke als weiterem Zusatzmodul;
- Fig. 31: eine gesonderte Darstellung der Rasenharke; und
- Fig. 32 und 33: eine Seitenansicht bzw. eine perspektivische Ansicht des Kippanhängers mit Zusatzmodulen in der Betriebsstellung für die Kehrmaschine.

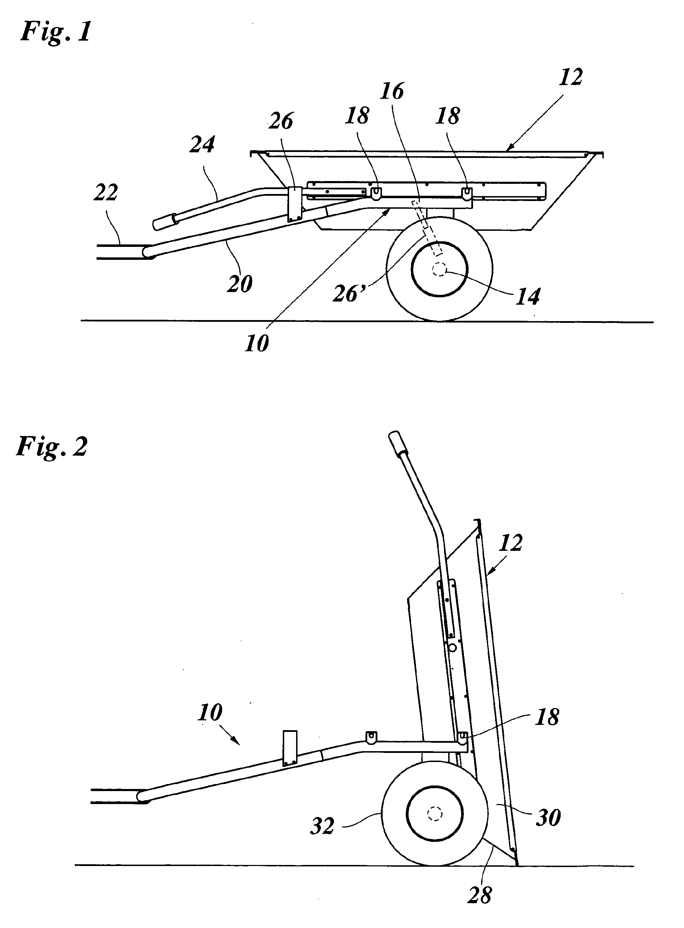

Der in Fig. 1 gezeigte Anhänger weist ein einachsiges Fahrgestell 10 auf, auf dem als Aufbau eine trichterförmige Wanne 12 montiert ist. Das Fahrgestell 10 weist einen Rohrrahmen auf, der oberhalb einer Radachse 14 einen Schemel 16 bildet, auf dem sich die Wanne 12 über vier Kugelpfannen 18 abstützt. Der Rohrrahmen des Fahrgestells ist nach vorn zu einer Deichsel 20 verlängert, die am vorderen Ende eine Kupplung 22 trägt, so daß der Anhänger an einen nicht gezeigten Aufsitzrasenmäher oder eine vergleichbare Kleinzugmaschine angekuppelt werden kann.

An der Wanne 12 ist seitlich eine nach vorn vorspringende Kippstange 24 angebracht. Diese Kippstange wird in Fig. 1 von einer von der Deichsel 20 aufragenden Verriegelungslasche 26 übergriffen, so daß die Wanne 12 in ihrer Position auf dem Schemel 16 verriegelt wird.

Die in einem gewissen Ausmaß elastisch auslenkbare Kippstange 24 läßt sich jedoch vom Sitz des Aufsitzmähers aus unter der Verriegelungslasche 26 wegschwenken und dann anheben, so daß die Wanne 12 relativ zum Fahrgestell 10 in die in Fig. 2. gezeigte Position nach hinten gekippt wird. Die Kippachse wird dabei durch die beiden hinteren Kugelpfannen 18 gebildet und liegt etwas hinter dem Schwerpunkt der Wanne 12, so daß die Wanne einerseits in der in Fig. 1 gezeigten Transportstellung stabil auf den Schemel aufliegt, andererseits jedoch nur eine geringe Kraft zum Kippen der Wanne benötigt wird. Die Schrägstellung der Rückwand 28 der Wanne und die Höhe der Kippachse über der Radachse 14 sind so gewählt, daß das Transportgut in der gekippten Position von selbst aus der Wanne herausrutscht. Erforderlichenfalls kann das Transportgut auch mit einem Besen oder einer Schaufel leicht aus der Wanne herausgekratzt werden. Der Kippwinkel beträgt etwa 90°, so daß der Boden der Wanne in Fig. 2 nahezu senkrecht steht.

Im gezeigten Beispiel sind auch die Seitenwände 30 der Wanne 12 schräg gestellt und so angeordnet, daß sie in der Kippstellung gemäß Fig. 2 an der Gummibereifung der Räder 32 des Fahrgestells anstoßen. Auf diese Weise kann die Gummibereifung beim Kippen als Aufpralldämpfer genutzt werden. Beim Kippvorgang verlagert sich der Schwerpunkt der Wanne 12 und ggf. des Inhalts nach hinten und bewegt sich über die Kippachse hinweg, so daß die Wanne den Kippvorgang selbsttätig vollendet, wenn die Kippstange 24 losgelassen wird.

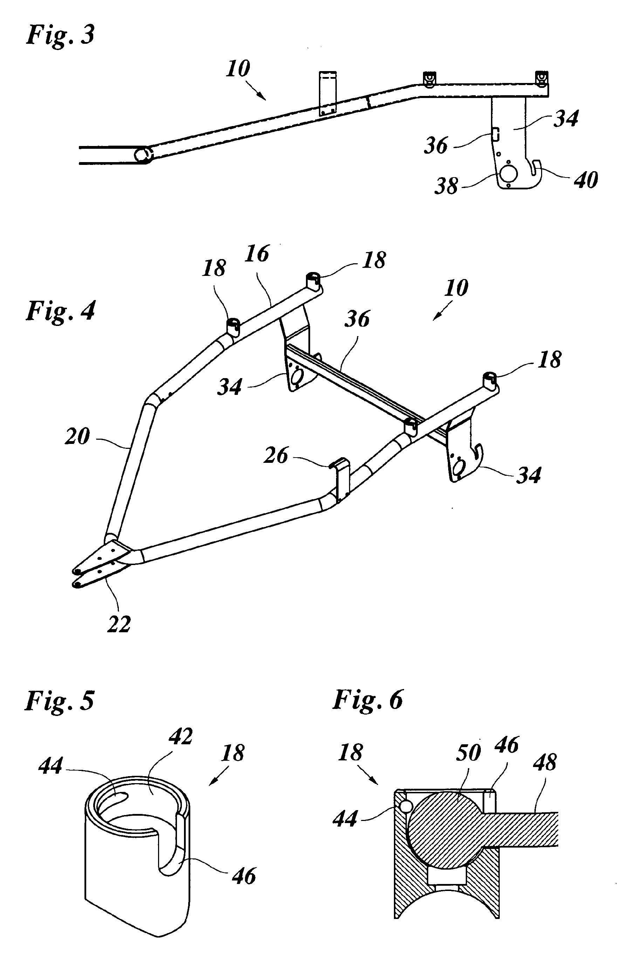

In Fig. 3 und 4 ist das Fahrgestell 10 ohne die Radachse und die Räder dargestellt. Die genaue Geometrie des die Deichsel 20 und den Schemel 16 bildenden Rohrrahmens ist in den Zeichnungen zu erkennen. Der Schemel 16 stützt sich auf zwei Stützböcken 34 ab, die durch eine Traverse 36 verbunden sind und Lager 38 für die Radachse bilden. Jeder Stützbock bildet außerdem einen nach oben offenen, kreisbogenförmigen Schlitz 40 (Fig. 3), der konzentrisch zu dem Lager 38 verläuft.

Die Kugelpfannen 18 sind in der Form eines Rechtecks auf dem Schemel 16 angeordnet. In Fig. 5 und 6 ist eine der Kugelpfannen 18 vergrößert und perspektivisch sowie in einem vertikalen Schnitt dargestellt. Die Kugelpfanne hat die Form eines vertikalen Zylinders und bildet eine nach oben offene Lagerschale 42 mit halbkugeligem Boden. In der Umfangswand der Lagerschale 42 sind eine exzentrische Querbohrung 44 und eine nach oben offene U-förmige Ausnehmung 46 ausgebildet. Die Wanne 12 weist für jede Kugelpfanne 18 einen waagerecht vorspringenden Lagerzapfen 48 auf, der am freien Ende eine Kugel 50 trägt (Fig. 6). Die Kugel 50 liegt passend in der Lagerschale 42, so daß der Schaft des Lagerzapfens 48 in der Ausnehmung 46 aufgenommen wird. Der Lagerzapfen 48 ist somit relativ zur Kugelpfanne einerseits um seine Längsachse drehbar und andererseits um eine senkrecht zur Zeichenebene in Fig. 6 durch die Mitte der Kugel 50 verlaufende Achse schwenkbar, wobei der Schaft aus der Ausnehmung 46 austritt.

Zur Montage der Wanne auf dem Fahrgestell braucht lediglich die Wanne so aufgesetzt zu werden, daß die Kugeln 50 in die Lagerschalen 42 der Kugelpfannen 18 eintreten. Mit Hilfe eines durch die Querbohrung 44 gesteckten Stiftes lassen sich die Kugeln dann je nach Bedarf so verriegeln, daß sie nicht nach oben aus der Kugelpfanne austreten können. Die oben erwähnten Dreh- und Schwenkbewegungen bleiben jedoch möglich. Um die in Fig. 2 gezeigte Kippbewegung zu ermöglichen, werden allenfalls die Kugeln in den beiden hinteren Kugelpfannen 18 verriegelt. Die beiden vorderen Kugelpfannen bleiben unverriegelt, so daß die Kugeln austreten können, wenn die Verriegelung der Kippstange 24 an der Verriegelungslasche 26 gelöst wird.

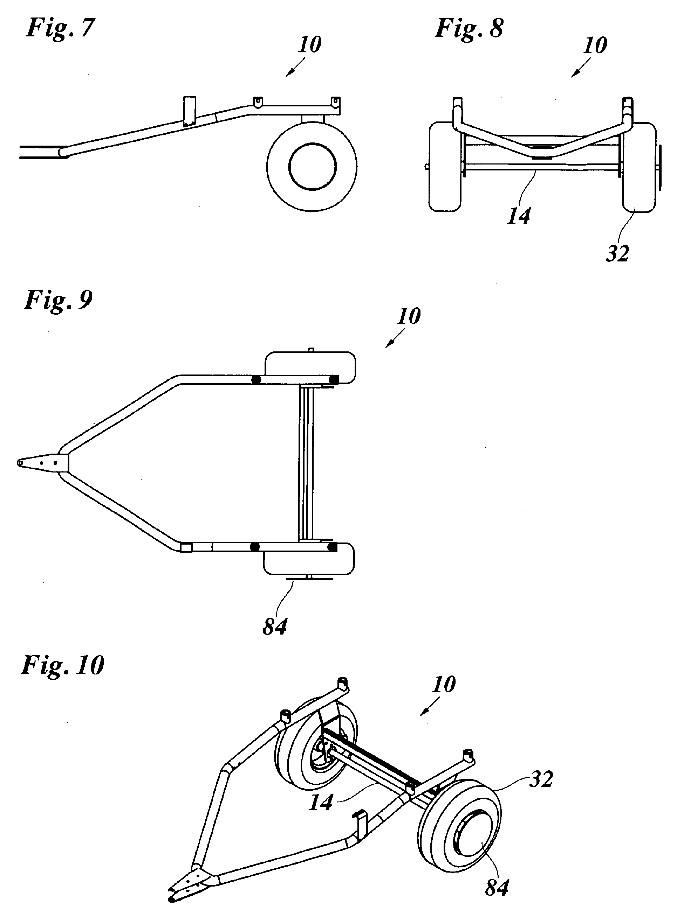

Fig. 7 bis 10 zeigen das komplette Fahrgestell 10 einschließlich der Radachse 14 und der Räder 32 in verschiedenen Ansichten und lassen die genaue räumliche Anordnung erkennen.

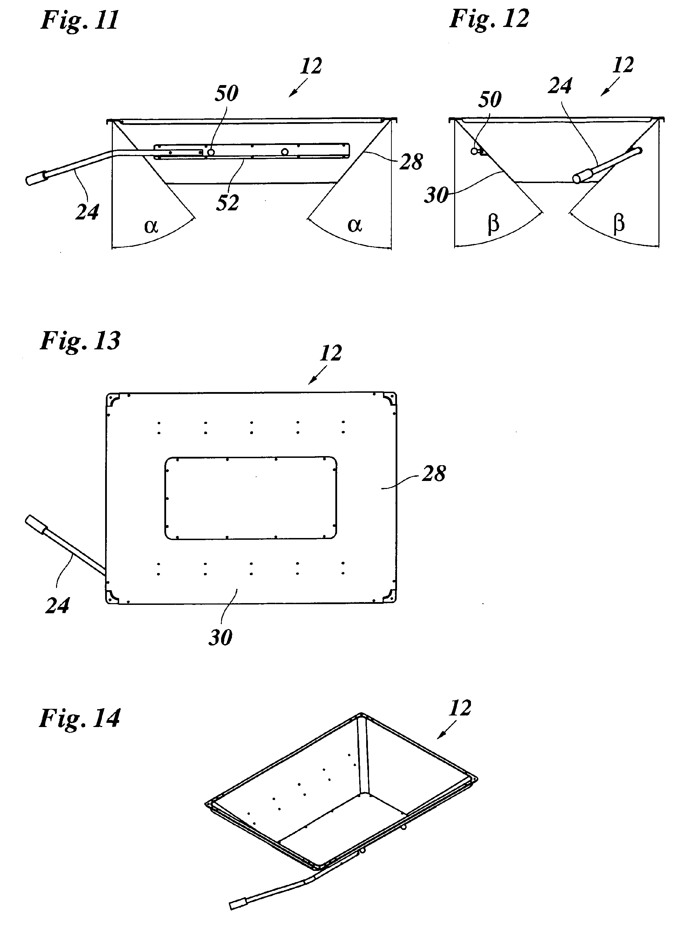

Fig. 11 bis 14 zeigen in verschiedenen Ansichten die genaue Konstruktion der Wanne 12. Wenn sich wie in Fig. 11 die Oberkante und der Boden der Wanne 12 in einer waagerechten Position befinden, bilden die Rückwand 28 und die vordere Wand der Wanne mit der Vertikalen jeweils einen Winkel α von 40°. Wie Fig. 12 zeigt, bilden die Seitenwände 30 der Wanne mit der Vertikalen jeweils einen Winkel β von 43°.

Fig. 12 und 13 zeigen außerdem, daß das vordere Ende der Kippstange 24 etwas nach innen abgewinkelt ist. Dies gestattet es, die Wanne auch um eine Längsachse, die durch die vorderen und hinteren Kugelpfannen auf der Seite der Kippstange 24 verläuft, zur Seite zu kippen. Dazu müssen die Kugeln 50 auf der gegenüberliegenden Seite unverriegelt sein. Wie Fig. 11 zeigt, sind die Kippstange 24 und die auf dieser Seite der Wanne angeordneten Kugeln 50 so an einer gemeinsamen Montageleiste 52 angebracht, daß der hintere Abschnitt der Kippstange auf der durch die Kugeln 50 definierten Kippachse liegt. Für das seitliche Kippen braucht deshalb die Kippstange nicht aus der Verriegelungslasche 26 (Fig. 1 und 4) gelöst zu werden.

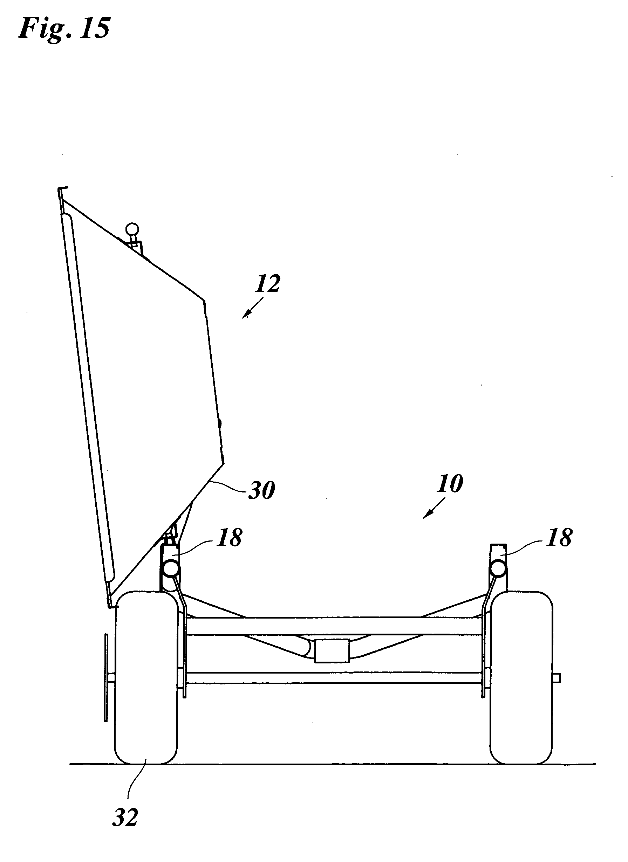

Fig. 15 zeigt eine Rückansicht des Anhängers mit zur Seite gekippter Wanne 12. Auch in diesem Fall ermöglicht die geneigte Seitenwand 30 der Wanne eine einfache Entleerung, und die Gummibereifung der Räder 32 bildet einen stoßdämpfenden Anschlag für den Rand der Wanne, so daß die Kippbewegung begrenzt wird.

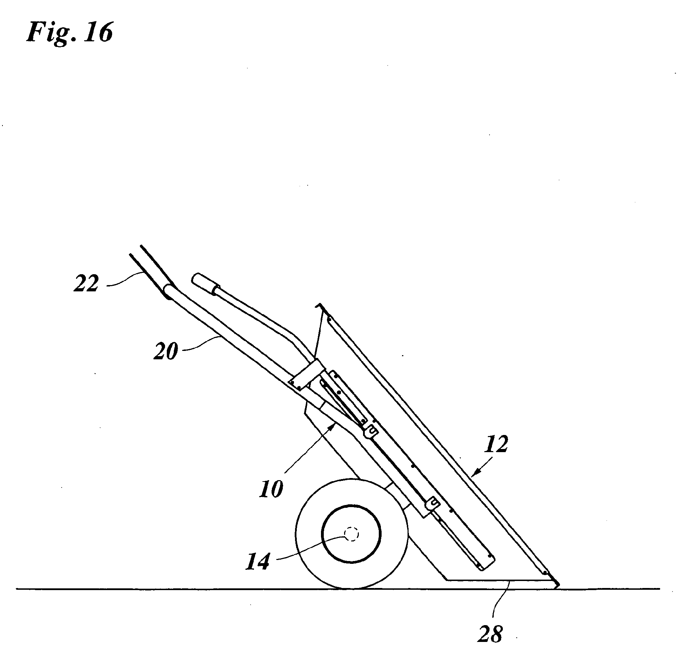

Fig. 16 illustriert eine weitere Kippmöglichkeit, bei der die Wanne 12 zusammen mit dem Fahrgestell 10 um die Radachse 14 gekippt wird. Dazu muß die Kupplung 22 vom Zugfahrzeug gelöst werden, damit die Deichsel 20 mit hoch schwenken kann. Die Rückwand 28 der Wanne liegt dann praktisch flach auf den Boden auf. Dies ermöglicht ein einfaches Beladen des Anhängers mit schweren Lasten wie Steinen, Baumwurzeln und dergleichen. Die Last wird einfach auf die Rückwand 28 der Wanne gerollt oder geschoben und dann mit der Deichsel 20 über einen langen Hebelarm hochgehebelt. Wahlweise kann an der Deichsel 20 eine an sich bekannte Bodenstütze montierbar sein, die den Anhänger in einer annähernd waagerechten Position hält und das Ankuppeln an das Zugfahrzeug erleichtert.

Aufgrund der beschriebenen Gestaltung und Abstützung der Wanne 12 bietet der Anhänger somit vielfältige Kippmöglichkeiten. Die Kugelpfannen ermöglichen zudem eine einfache Montage und Demontage der Wanne. Bei der Auslieferung einer Vielzahl von Anhängern an den Handel können die Wannen platzsparend gestapelt werden, und auf Seiten des Händlers lassen sich die Wannen dann sehr einfach auf dem Fahrgestell montieren. Auch für den Endanwender hat die einfache Montage- und Demontagemöglichkeit den Vorteil, daß der Anhänger bei Nichtgebrauch, etwa im Winter, leicht demontiert und platzsparend verstaut werden kann. Darüber hinaus läßt sich die Wanne 12 auch losgelöst vom Fahrgestell als Behälter nutzen.

Wahlweise kann zur Unterstützung des Kippvorgangs und zum leichterern Verriegeln der Wanne in vorzugsweise stufenlos einstellbaren Positionen auch ein elektrischer Stellantrieb oder eine verriegelbare Gasfeder 26' vorgesehen sein, die z. B. an einen der Stützböcke 34 und die Wanne 12 angelenkt sein kann, wie strichpunktiert in Fig. 1 angedeutet ist.

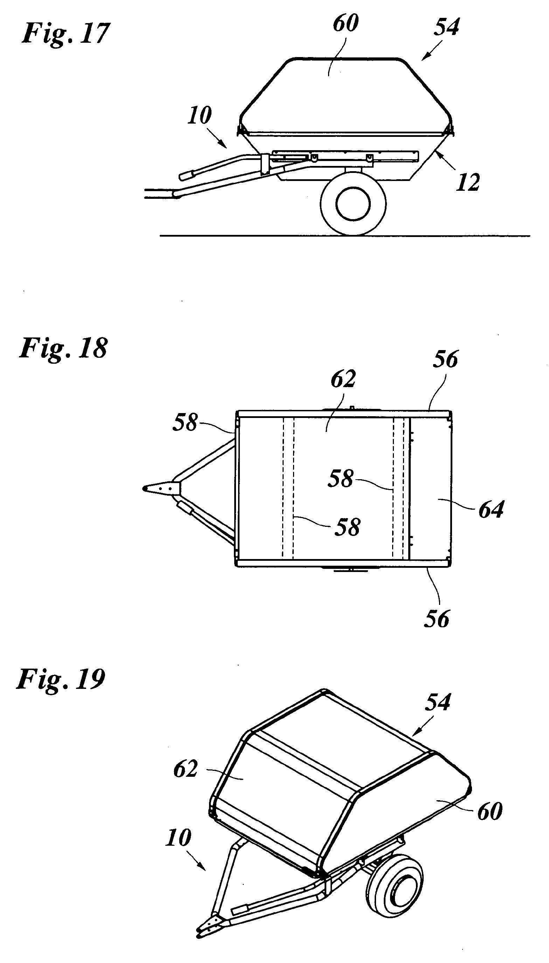

Fig. 17 bis 19 zeigen eine Ausführungsform, bei der auf die Wanne 12 ein als Zusatzmodul lieferbarer Volumenaufsatz 54 aufgesetzt ist. Der Volumenaufsatz 54 hat die Form einer in der Seitenansicht trapezförmigen Haube und läßt sich lösbar, vorzugsweise mit Scharnieren, auf einen Randflansch der Wanne 12 befestigen. Die tragende Konstruktion des Volumenaufsatzes wird durch ein steckbares Rahmengestell mit zwei trapezförmigen Rahmenprofilen 56 gebildet, die durch Querprofilstäbe 58 miteinander verbunden sind (Fig. 18).

Beim Transport von leichtem Material wie Blättern oder Moos wird es häufig genügen, die offene Rahmenkonstruktion lose auf die Wanne 12 aufzusetzen um zu verhindern, daß das Transportgut während des Transports herabfällt oder weggeweht wird. Erforderlichenfalls ist es jedoch möglich, die Rahmenkonstruktion an der Wanne zu befestigen und/oder die Seitenwände sowie wahlweise auch die Decke des Volumenaufsatzes durch geeignete Verkleidungen zu schließen.

Besonders zweckmäßig sind Verkleidungen in der Form von Zelttüchern oder luftdurchlässigen Netzen, wie sie etwa auch für Fangkörbe von Rasenmähern verwendet werden. Im gezeigten Beispiel sind die seitlichen Rahmenprofile 56 durch Seitentücher 60 geschlossen, die am Rand mit Zeltkedern in entsprechenden Nuten der Rahmenprofile 56 gehalten sind. Ein Decktuch 62 (Fig. 18) ist wiederum mit Zeltkedern zwischen den beiden Rahmenprofilen 56 geführt oder wahlweise auch mit Clips lösbar an den Rahmenprofilen befestigt. In den hier gezeigten Beispielen läßt das Decktuch 62 den hinteren schräg abfallenden Schenkel des trapezförmigen Volumenaufbaus offen, so daß dort eine Füll- oder Auskippöffnung 64 gebildet wird.

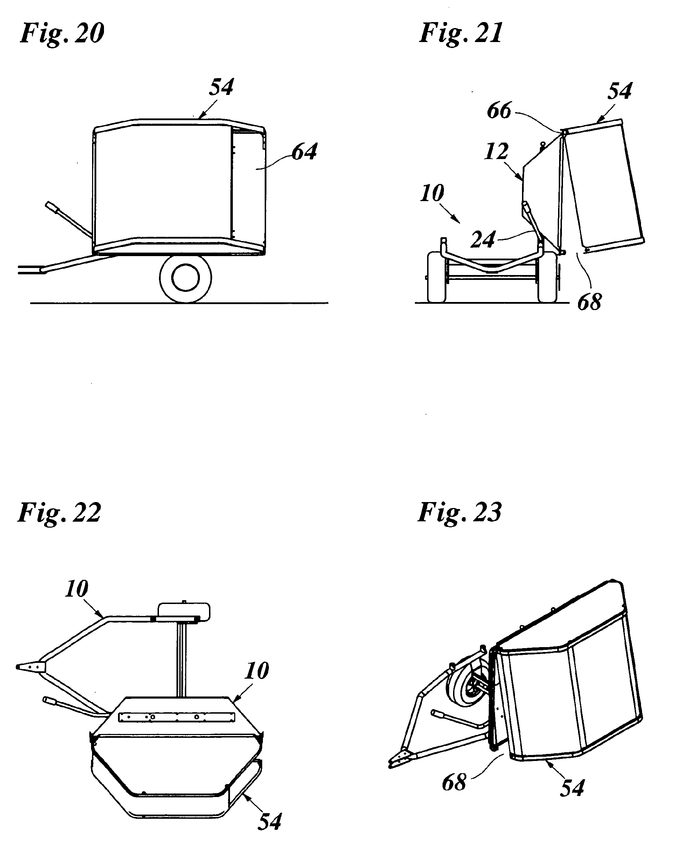

Wie Fig. 20 bis 23 zeigen, ist auch bei aufgesetztem Volumenaufsatz 54 ein Seitenkippen möglich. Die Rahmenkonstruktion des Volumenaufsatzes 54 wird in diesem Fall mit Scharnierteilen 66 (Fig. 21) an dem oberen Längsrand der Wanne 12 befestigt, der der Kippstange 24 gegenüberliegt. Auf der entgegengesetzten Seite liegt der Volumenaufsatz lose auf, so daß er beim Kippen von selbst aufklappt und eine seitliche Auskippöffnung 68 bildet.

In einer modifizierten Ausführungsform können die Seitenwände des Volumenaufsatzes auch nach oben schräg zusammenlaufen, damit das selbsttätige Aufklappen des Volumenaufsatzes beim Seitenkippen noch stärker durch das Gewicht des ausgekippten Materials unterstützt wird.

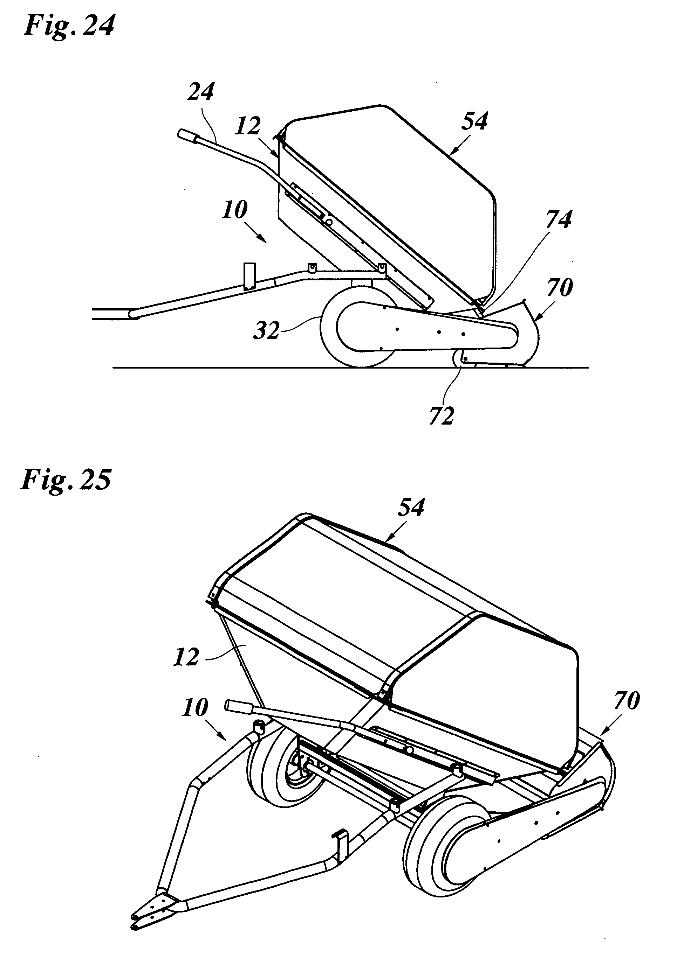

Fig. 24 und 25 zeigen eine Ausführungsform, bei der als weiteres Zusatzmodul eine Kehrmaschine 70 an das Fahrgestell 10 angebaut ist. Die Kehrmaschine 70 stützt sich mit Stützrollen 72 auf dem Boden ab und ist mit der Wanne 12 auf der Seite der Kippstange 24 durch eine Kette, eine Zugfeder 74 oder dergleichen verbunden, so daß sie die Wanne in eine leicht gekippte Position zieht, wie in Fig. 24 gezeigt ist. Die Kippachse wird dabei wie in Fig. 2 durch die hinteren Kugelpfannen 18 gebildet. Die hintere Öffnung 64 des Volumenaufsatzes 54 dient in diesem Fall als Einwurföffnung, durch die das von der Kehrmaschine 70 aufgesammelte Kehrgut direkt in die Wanne bzw. den Volumenaufsatz geworfen wird. Der Antrieb der Kehrmaschine erfolgt über mindestens eines der Räder 32 des Fahrgestells.

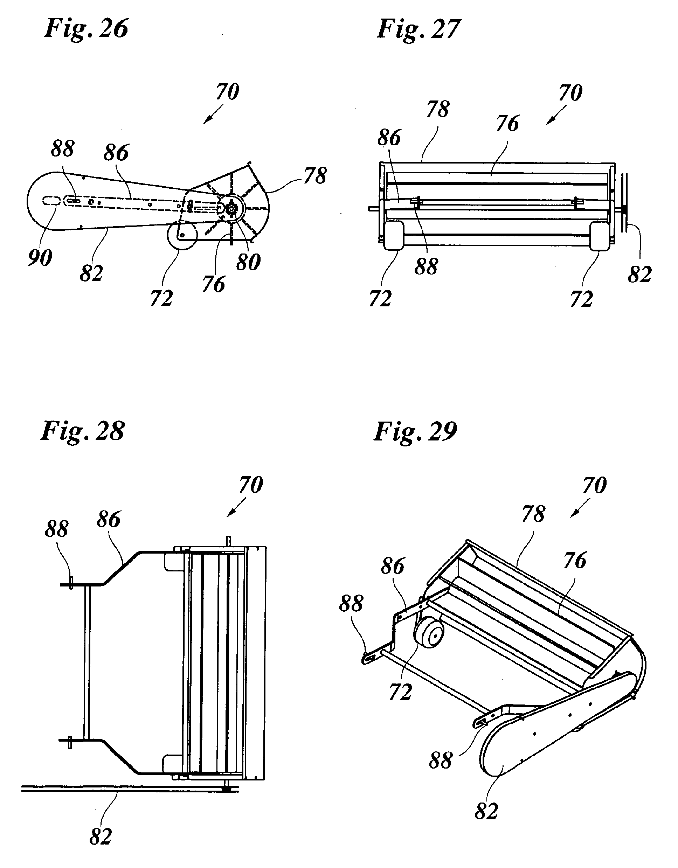

In Fig. 26 bis 29 ist die Kehrmaschine 70 gesondert dargestellt. Eine Bürste 76 ist drehbar in einem Gehäuse 78 gelagert und wird über ein an einem Ende der Bürste angeordnetes Ritzel 80 eines Kettentriebes angetrieben. Von dem Kettentrieb ist in der Zeichnung außer dem Ritzel 80 lediglich eine Schutzverkleidung 82 gezeigt. Zu dem Kettentrieb gehört weiterhin noch ein größeres vorderes Ritzel 84, das auf einem Ende der Radachse 14 des Fahrgestells sitzt und in Fig. 9 und 10 gezeigt ist. Ein Rahmen 86 (Fig. 28) ist am vorderen Ende mit längsverstellbaren Stehbolzen 88 versehen und dient zum verstellbaren Ankuppeln der Kehrmaschine an das Fahrgestell 10. Die verstellbaren Stehbolzen 88 und ein Langloch 90 in der Schutzverkleidung 82 (Fig. 26) ermöglichen es, den Abstand zwischen den Ritzeln 80, 84 zu variieren und so die Kettenspannung einzustellen.

Bei der Montage der Kehrmaschine 70 werden die Stehbolzen 88 in die Schlitze 40 der Stützböcke 34 eingehängt, die in Fig. 3 gezeigt sind. In diesem Zustand ist das vordere Ritzel 84 des Kettentriebes noch in der Schutzverkleidung 82 aufgenommen, und eine nicht gezeigte Kette ist auf beide Ritzel 80, 84 aufgezogen. Die Schutzverkleidung 82 ist federnd gelagert am Gehäuse 78 an der Kehrmaschine gehalten und wird seitlich auf das Ende der Radachse 14 des Fahrgestells aufgesteckt, wobei eine drehfeste Verbindung zwischen dem vorderen Ritzel 84 und der Radachse 14 hergestellt wird.

Die Radachse 14 ist eine drehbare Welle, die über nicht gezeigte Freilaufnaben so mit den beiden Rädern 32 des Fahrgestells gekoppelt ist, daß sie durch diese Räder angetrieben wird, jedoch auch schneller als die Räder laufen kann. Bei Kurvenfahrten wird somit die Welle nach Art eines Differentialgetriebes jeweils durch das schnellere der beiden Räder angetrieben.

Wenn der Anhänger mit der angekuppelten Kehrmaschine 70 durch das Zugfahrzeug gezogen wird, so wird die Bürste 76 über den Kettentrieb durch die Räder 32 des Fahrgestells in der gleichen Richtung wie diese Räder angetrieben. Die unterschiedlichen Durchmesser der Ritzel 80, 84 bewirken jedoch eine Übersetzung ins Schnelle, so daß die Bürste den Boden entgegengesetzt zur Fahrtrichtung überstreicht und abkehrt. Das Kehrgut wird durch die Rückwand des Gehäuses 78 umgelenkt und in die Wanne 12 geworfen. Da die Bürste 76 durch beide Räder 32 des Fahrgestells angetrieben wird und zudem die Räder durch das Gewicht der Wanne 12 und ggf. des Inhalts fest gegen den Boden angedrückt werden, läßt sich ohne aktiven Antrieb über eine Zapfwelle oder dergleichen ein hohes Antriebsdrehmoment erzeugen.

Die Stützräder 72 sind höhenverstellbar am Gehäuse 78 der Kehrmaschine angeordnet, so daß sich die Höhe der Bürste 76 über den Boden einstellen läßt. Bei der Höhenverstellung sowie beim Überfahren von Bodenunebenheiten schwenkt die Kehrmaschine um die Radachse 14, da sich die Stehbolzen 88 in den bogenförmigen Schlitzen 40 verlagern können. Die Kettenspannung bleibt dabei praktisch unverändert.

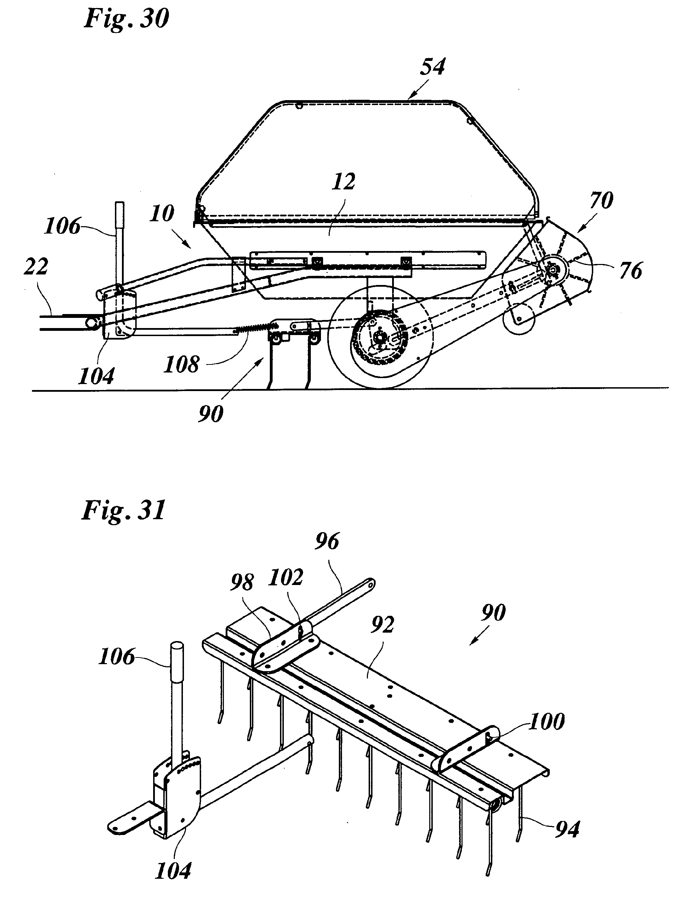

Wenn der Kehrbetrieb unterbrochen werden soll, kann der Fahrer vom Fahrersitz aus mit Hilfe der Griffstange 24 die Wanne 12 in die waagerechte Position kippen und an der Verriegelungslasche 26 verriegeln. Durch die Kette oder Zugfeder 74 (Figur 24) wird dabei die Kehrmaschine nach oben in die in Figur 30 gezeigte Position geschwenkt. Die Bürste 76 wird zwar weiterhin angetrieben, überstreicht jedoch nicht mehr den Boden.

Wenn die Kehrmaschine vom Boden freikommt, so wird ein beträchtlicher Teil des Gewichts der Kehrmaschine von den Stehbolzen 88 aufgenommen, die sich in den Schlitzen 40 am Fahrgestell abstützen. Die Kehrmaschine schwenkt deshalb um eine durch diese Stehbolzen 88 definierte Achse, mit der Folge, daß sich der Abstand zwischen den Ritzeln 80, 84 verringert und die Kettenspannung etwas nachläßt.

Der An- und Abbau der Kehrmaschine 70 erfolgt zweckmäßig in der in Figur 30 gezeigten angehobenen Position. In dieser Position wird der Montagevorgang durch die geringere Kettenspannung erleichtert. Wenn dann die Kehrmaschine durch Kippen der Wanne 12 in die in Figur 25 gezeigte Betriebsstellung abgesenkt wird, so wird die Kette automatisch nachgespannt.

Der Volumenaufbau 54 ermöglicht ein hohes Fassungsvermögen beim Aufsammeln des Kehrgutes. In der in Fig. 30 gezeigten Position kann die Wanne 12 auch bei angebrachter Kehrmaschine 70 durch Seitenkippen entleert werden, wie in Fig. 20 bis 23 gezeigt ist. Dies ist möglich, da sich die Kette oder Zugfeder 74 (Fig. 24) auf der gleichen Seite wie die Kippstange 24 befindet.

In Fig. 30 ist als weiteres Zusatzmodul ein Rasenkamm 90 gezeigt, mit dem der Rasen abgeharkt oder gelüftet werden kann. Da der Rasenkamm 90 vor der Radachse des Fahrgestells und damit auch vor der Kehrmaschine 70 angeordnet ist, kann in einem Arbeitsgang gemäht, gelüftet und abgekehrt werden, wobei der Rasenschnitt und das vom Rasenkamm gelockerte Moos durch die Kehrmaschine in den Anhänger befördert werden. Wahlweise ist es jedoch auch möglich, in einem ersten Arbeitsgang bei abgeschaltetem Mähwerk des Rasenmähers und inaktiver Kehrmaschine (Position gemäß Fig. 30) den Rasen abzuharken, um größere Zweige und sonstige Fremdkörper vom Rasen zu entfernen, Maulwurfshaufen glattzustreichen und dergleichen, und dann in einem zweiten Arbeitsgang zu mähen und zu kehren. Wenn lediglich geharkt werden soll, können selbstverständlich die Kehrmaschine 70 und ggf. auch die Wanne 12 abgebaut sein.

In Fig. 31 ist der Rasenkamm 90 gesondert dargestellt. Der Rasenkamm weist eine Grundplatte 92 auf, die mit mehreren federnden Zinken 94 bestückt ist. Wahlweise können auch mehrere anbaubare Grundplattenmodule vorgesehen sein, so daß sich die Anzahl der Zinken variieren läßt. Über ein oder zwei Schwingen 96 ist die Grundplatte 92 gelenkig und somit höhenverstellbar mit den Stützböcken 34 (Fig. 3) des Fahrgestells 10 verbunden. Auf Seiten der Grundplatte sind die Schwingen 96 gelenkig an Haltewinkeln 98 befestigt, und sie greifen mit Stehbolzen 100 in bogenförmige Langlöcher 102 der Haltewinkel ein. Durch Verstellen und Fixiren der Position der Stehbolzen 100 in den Langlöchern 102 kann somit die Grundplatte 92 waagerecht, d.h., parallel zur Rasenfläche ausgerichtet werden.

An der Kupplung 22 am vorderen Ende der Deichsel 24 ist ein Rastblech 104 befestigt, beispielsweise lösbar angeklemmt, an dem ein rechtwinklig abgewinkelter und zwischen verschiedenen Raststellungen verschwenkbarer Stellhebel 106 gelagert ist. Das freie hintere Ende des Stellhebels 106 ist über eine Zugfeder 108 (Fig. 30) mit der Grundplatte 92 verbunden. Durch Verschwenken des Stellhebels 106 kann somit die Andruckkraft eingestellt werden, mit der die Zinken 94 gegen den Boden drücken. Da die Schwenkachse des Stellhebels 106 im Rastblech 104 und damit in unmittelbarer Nähe der Kupplung 22 liegt, läßt sich auch bei unbeladenem Anhänger eine hohe Andruckkraft erzeugen, und das Fahrgestell des Anhängers dient in erster Linie dazu, den Rasenkamm in einer parallel zum Boden ausgerichteten Position zu halten. Bodenunebenheiten können durch die Zugfeder 108 kompensiert werden. Wenn andererseits der Stellhebel 106 ganz nach vorn gezogen wird, so wird der Rasenkamm 90 über die Zugfeder 108 in eine unwirksame Position angehoben. Der Stellhebel 106 läßt sich vom Fahrersitz des Rasenmähers aus bedienen.

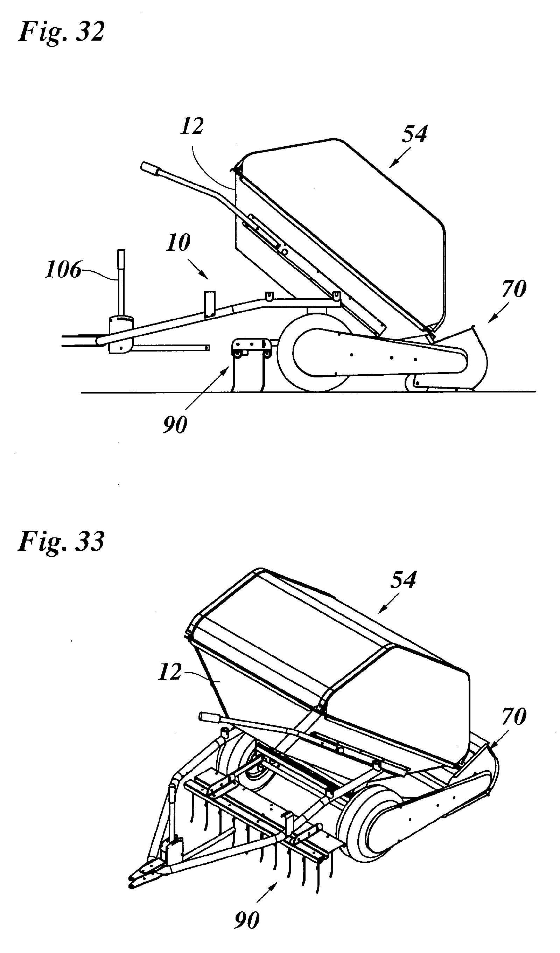

Fig. 32 und 33 zeigen den Anhänger mit sämtlichen Zusatzmodulen in der Betriebsstellung für kombiniertes Harken und Kehren.

In einer modfizierten Ausführungsform kann der Rasenkamm auch vor der Bürste 76 in das Gehäuse 78 der Kehrmaschine intergriert sein, so daß er sich zusammen mit der Kehrmaschine 70 anheben und absenken läßt.

## Patentansprüche

1. Kippanhänger für Aufsitzmäher, mit einem Fahrgestell (10) und einem darauf montierten Aufbau, **dadurch gekennzeichnet, daß** der Aufbau eine trichterförmige Wanne (12) ist, die sich über Kugelpfannen (18) so auf dem Fahrgestell (10) abstützt, daß sie um mindestens eine durch zwei der Kugelpfannen (18) gebildete Achse kippbar ist.

2. Kippanhänger nach Anspruch 1, **dadurch gekennzeichnet, daß** die Wanne (12) eine schräge Rückwand (18) und mindestens eine schräge Seitenwand (30) aufweist und daß mindestens drei Kugelpfannen (18) so auf dem Fahrgestell (10) angeordnet sind, daß sie zwei zueinander rechtwinklige Kippachsen für die Wanne (12) definieren.

3. Kippanhänger nach Anspruch 1 oder 2, **dadurch gekennzeichnet, daß** das Fahrgestell (10) gummibereifte Räder (32) aufweist, die für die Wanne (12) einen stoßdämpfenden Anschlag zur Begrenzung der Kippbewegung um mindestens eine der Kippachsen bilden.

4. Kippanhänger nach einem der vorstehenden Ansprüche, **dadurch gekennzeichnet, daß** an der Wanne (12) eine nach vorn vorspringende Kippstange (24) angeordnet ist.

5. Kippanhänger nach Anspruch 4, **dadurch gekennzeichnet, daß** die Kippstange (24) an einer Seite der Wanne (12) angebracht und in ihrem nach vorn über die Wanne (12) überstehenden Teil nach innen abgewinkelt ist.

6. Kippanhänger nach Anspruch 4 oder 5, **dadurch gekennzeichnet, daß** die Kippstange (24) an einer an einer Deichsel (20) des Fahrgestells (10) angebrachten Verriegelungslasche (26) verriegelbar ist, um die Wanne (12) in ihrer nicht gekippten Stellung zu fixieren.

7. Kippanhänger nach Anspruch 2 und einem der Ansprüche 4 bis 6, **dadurch gekennzeichnet, daß** der von der Verriegelungslasche (26) erfaßte Teil der Kippstange (24) auf einer Linie mit zweien der Kugelpfannen (18) liegt, die eine Kippachse für das Seitenkippen definieren.

8. Kippanhänger nach einem der vorstehenden Ansprüche, **dadurch gekennzeichnet, daß** das Fahrgestell (10) eine einzige Radachse (14) aufweist und daß die Wanne (12) so am Fahrgestell (10) angeordnet ist, daß die Wanne (12) und das Fahrgestell (10) gemeinsam um die Radachse (14) in eine Position schwenkbar sind, in der die geneigte Rückwand (28) der Wanne flach auf dem Boden aufliegt.

9. Kippanhänger für Aufsitzmäher, mit einem Fahrgestell (10) und einem darauf montierten Aufbau (12), insbesondere nach einem der vorstehenden Ansprüche, **gekennzeichnet durch** einen lösbaren, auf den Aufbau (12) aufsetzbaren Volumenaufsatz (54), der eine tragende Konstruktion in der Form eines Rahmengestells (56, 58) aufweist.

10. Kippanhänger nach Anspruch 9, **dadurch gekennzeichnet, daß** der Volumenaufsatz (54) durch an der Rahmenkonstruktion (56, 58) gehaltene Seitentücher (60) und/oder ein Decktuch (62) verkleidet ist.

11. Kippanhänger nach Anspruch 10, **dadurch gekennzeichnet, daß** das Decktuch (62) eine rückwärtige Auskippöffnung (64) freiläßt.

12. Kippanhänger nach einem der Ansprüche 9 bis 11, **dadurch gekennzeichnet, daß** der Volumenaufsatz (54) auf einer Seite des Aufbaus (12), die einer Seitenkippachse des Aufbaus gegenüberliegt, über Scharnierteile (66) so mit dem oberen Rand des Aufbaus verbunden ist, daß er beim Kippen des Aufbaus (12) um die Seitenkippachse aufklappt und eine seitliche Auskippöffnung (68) freigibt.

13. Kippanhänger für Aufsitzmäher, mit einem Fahrgestell (10) und einem darauf montierten Aufbau (12), insbesondere nach einem der vorstehenden Ansprüche, **gekennzeichnet durch** eine lösbar am Fahrgestell (10) montierten Kehrmaschine (70), die **durch** mindestens ein Rad (32) des Fahrgestells (10) antreibbar ist.

14. Kippanhänger nach Anspruch 13, **dadurch gekennzeichnet, daß** der Antrieb der Kehrmaschine (70) über eine Welle erfolgt, die zugleich die Radachse (14) des einachsigen Anhängers bildet und über Freilaufnaben mit beiden Rädern (32) des Anhängers gekoppelt ist.

15. Kippanhänger nach Anspruch 13 oder 14, **dadurch gekennzeichnet, daß** die Kehrmaschine (70) dazu ausgebildet ist, an der Rückseite des Kippanhängers montiert zu werden und das Kehrgut in den Aufbau (12) auszuwerfen.

16. Kippanhänger nach einem der Ansprüche 13 bis 15, **dadurch gekennzeichnet, daß** zum Antrieb der Kehrmaschine (70) ein Riemen- oder Kettentrieb (80, 82, 84) vorgesehen ist und daß die Kehrmaschine mit dem Fahrgestell (10) über einen Rahmen (86) verbunden ist, der mit Stehbolzen (88) in Schlitze (40) des Fahrgestells eingreift, die kreisbogenförmig um die Radachse (14) des Fahrgestells verlaufen.

17. Kippanhänger nach einem der Ansprüche 13 bis 16, **dadurch gekennzeichnet, daß** die Kehrmaschine (70) schwenkbar am Fahrgestell (10) angebracht und durch ein Zugglied (74) so mit dem Aufbau (12) gekoppelt ist, daß sie durch Kippen des Aufbaus zwischen einer Betriebsstellung und einer Ruhestellung verschwenkbar ist.

18. Kippanhänger für Aufsitzmäher, mit einem Fahrgestell (10) und einem darauf montierten Aufbau (12), insbesondere nach einem der vorstehenden Ansprüche, **gekennzeichnet durch** einen lösbar am Fahrgestell (10) montierten Rasenkamm (90).

19. Kippanhänger nach einem der Ansprüche 13 bis 17 und nach Anspruch 18, **dadurch gekennzeichnet, daß** der Rasenkamm (90) in Fahrtrichtung vor der Kehrmaschine (70) angeordnet ist.

20. Kippanhänger nach Anspruch 18 oder 19, **dadurch gekennzeichnet, daß** der Rasenkamm (90) über mindestens eine Schwinge (96) schwenkbar mit dem Fahrgestell (10) verbunden und über eine Zugfeder (108) mit einem schwenkbar an einer Deichsel (20) des Kippanhängers angebrachten Stellhebel (106) verbunden ist, der zur Einstellung der Höhe des Rasenkamms (90) über dem Boden und/oder zur Einstellung der Andruckkraft des Rasenkamms gegen den Boden in unterschiedlichen Raststellungen arretierbar ist.

21. Kippanhänger nach einem der Ansprüche 18 bis 20, **dadurch gekennzeichnet, daß** der Rasenkamm (90) in unterschiedlichen Neigungswinkeln relativ zur Schwinge (96) fixierbar ist.
